(19) **Europäisches Patentamt European Patent Office Office européen des brevets**

(11) **EP 4 693 470 A1**

(12) **EUROPEAN PATENT APPLICATION**
published in accordance with Art. 153(4) EPC

(43) Date of publication:
**11.02.2026 Bulletin 2026/07**

(21) Application number: **24807589.7**

(22) Date of filing: **17.05.2024**

(51) International Patent Classification (IPC):
$H01M\ 4/36$ (2006.01)    $H01M\ 4/525$ (2010.01)
$C01G\ 53/00$ (2025.01)    $H01M\ 4/131$ (2010.01)
$H01M\ 10/052$ (2010.01)    $C30B\ 29/22$ (2006.01)
$H01M\ 4/02$ (2006.01)

(52) Cooperative Patent Classification (CPC):
Y02E 60/10

(86) International application number:
**PCT/KR2024/006693**

(87) International publication number:
**WO 2024/237718 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 KR 20230064596**
**18.05.2023 KR 20230064597**
**14.06.2023 KR 20230076142**

(71) Applicant: **LG Chem, Ltd.**
**Seoul 07336 (KR)**

(72) Inventors:
• **CHOE, Gwang Seok**
**Daejeon 34122 (KR)**

• **JEONG, Myung Gi**
**Daejeon 34122 (KR)**
• **KIM, Ji Sun**
**Daejeon 34122 (KR)**
• **JU, Jin Wook**
**Daejeon 34122 (KR)**
• **KIM, Yern Seung**
**Daejeon 34122 (KR)**
• **KIM, Sang Hun**
**Daejeon 34122 (KR)**
• **KIM, Sol Jin**
**Daejeon 34122 (KR)**
• **HWANG, Du Sun**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE MATERIAL, AND POSITIVE ELECTRODE AND LITHIUM SECONDARY BATTERY COMPRISING SAME**

(57) The present invention relates to a positive electrode material comprising a plurality of single-particle-based positive electrode active material particles, each of which includes 1 to 30 primary particles, wherein the ratio of the arithmetic average value of the solidity of the primary particles to the average aspect ratio of the primary particles is 0.58 or more, as measured from a segmentation image divided for each primary particle unit, obtained by image processing of a scanning electron microscope (SEM) image of the positive electrode material, while the solidity is defined by equation 1, and the single-particle-based positive electrode active material includes a lithium-nickel-based oxide having a composition of [chemical formula 1]. [Equation 1] Solidity = $A_r / A_c$, where $A_r$ is the real area of each primary particle measured in the segmentation image, and $A_c$ is the area of a conceptual figure obtained by connecting outermost points of each primary particle measured in the segmentation image. [Chemical formula 1] $Li_a[Ni_xCo_yM^1_zM^2_{1-x-y-z}]O_2$, where $M^1$ includes Mn, Al, or a combination thereof, $M^2$ includes at least one selected from the group consisting of B, Ba, Ce, Cr, F, Mg, Al, V, Ti, Fe, Zr, Zn, Si, Y, Nb, Ga, Sn, Mo, W, P, and Sr, and $1,0 \le a \le 1.3$, $0.5 \le x < 1.0$, $0 < y < 0.5$, $0 < z < 0.5$.

EP 4 693 470 A1

FIG. 3

(A)                                        (B)

**Description**

## TECHNICAL FIELD

Cross-reference to Related Applications

The present application claims the benefit of priority based on Korean Patent Application Nos. 10-2023-0064596 and 10-2023-0064597, filed on May 18, 2023, Korean Patent Application No. 10-2023-0076142, filed on June 14, 2023, the entire disclosures of which are incorporated herein by reference.

Technical Field

The present invention relates to a positive electrode material, a positive electrode including the same, and a lithium secondary battery, and more specifically, to a positive electrode material including a single particle-based positive electrode active material in which the shape of a primary particle is controlled to satisfy certain conditions, a positive electrode including the positive electrode material, and a lithium secondary battery.

## BACKGROUND ART

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide ($LiCoO_2$), lithium nickel oxide ($LiNiO_2$), lithium manganese oxide ($LiMnO_2$, $LiMnO_4$, or the like), a lithium iron phosphate compound ($LiFePO_4$), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese-based oxides including Ni, Co, and Mn are widely used in electric vehicle batteries.

Conventional lithium metal oxides are generally in the form of spherical secondary particles in which tens to hundreds of primary particles are aggregated. However, with respect to the lithium metal oxides in the form of secondary particles in which many primary particles are aggregated as described above, there is a limitation in that particle breakage, in which the primary particles fall off in a rolling process during preparation of a positive electrode, is easy to occur and cracks occur in the particles during charge and discharge. When the particle breakage or cracks of the positive electrode active material occur, since a contact area with the electrolyte solution increases, gas generation and degradation of the active material due to a side reaction with the electrolyte solution are increased, and as a result, there is a limitation in that lifetime characteristics are deteriorated.

In addition, the demand for high-output and high-capacity batteries, such as electric vehicle batteries, has recently increased, and accordingly, the nickel content in the positive electrode active material is gradually increasing. When the nickel content in the positive electrode active material is increased, initial capacity characteristics are improved, but the repetition of charging and discharging results in structural collapse of the positive electrode active material, and as a result, the degradation rate of the positive electrode active material is increased, thereby leading to deterioration in lifetime characteristics and battery safety.

In order to solve the above limitations, a technique for preparing a positive electrode active material in the form of single particles rather than secondary particles by increasing a sintering temperature during the preparation of lithium nickel cobalt manganese oxides has been proposed. The positive electrode active material in the form of single particles has a smaller contact area with the electrolyte solution than that of a conventional positive electrode active material in the form of secondary particles, and thus has fewer side reactions with the electrolyte and excellent particle strength such that particle breakage is less during the manufacture of an electrode. Therefore, when the positive electrode active material in the form of single particles is applied, there is an advantage that gas generation and lifetime characteristics are excellent.

However, in the case of the conventional positive electrode active material in the form of a single particle, less interface between primary particles which is a movement path of lithium ions inside the particle makes lithium mobility poor, and thus the resistance is high and output characteristics are deteriorated, and the rolling properties thereof are inferior to those of the positive electrode active material in the form of a secondary particle, and thus the rolling density is deteriorated, resulting in a decrease in the energy density.

## DISCLOSURE OF THE INVENTION

## TECHNICAL PROBLEM

To solve the above limitations, an aspect of the present invention provides a single particle-based positive electrode material having excellent capacity characteristics and resistance characteristics as compared to the conventional single particle-based positive electrode active material by controlling the primary particle shape of the positive electrode material powder to satisfy certain conditions.

In addition, another aspect of the present invention provides a positive electrode including the above-described positive electrode material and a lithium secondary battery having excellent lifetime characteristics and output characteristics.

## TECHNICAL SOLUTION

According to an embodiment of the present invention, there are provided a positive electrode material, a positive electrode including the positive electrode material, and a lithium secondary battery including the positive electrode.

(1) According to an embodiment of the present invention, there is provided a positive electrode material including a plurality of single particle-based positive electrode active material particles, wherein the single particle-based positive electrode active material particle includes 1 to 30 primary particles, a ratio of an arithmetic mean value of the ruggednesses of the primary particles to an average aspect ratio of the primary particles, which are measured from the segmentation image partitioned for each primary particle unit obtained by image-processing a scanning electron microscope (SEM) image of the positive electrode material, is at least 0.58, the ruggedness is defined by Equation 1 below, and the single particle-based positive electrode active material includes a lithium nickel-based oxide having a composition represented by Formula 1 below:

$$[\text{Equation 1}] \quad \text{Ruggedness} = A_r \, / \, A_c$$

wherein, in Equation 1 above, $A_r$ is the actual area of each primary particle measured from the segmentation image, and $A_c$ is the area of a virtual figure obtained by connecting the outermost points of each primary particle measured from the segmentation image, and

$$[\text{Formula 1}] \quad Li_a [Ni_x Co_y M^1_z M^2_{1-x-y-z}]O_2$$

wherein, in Formula 1 above, $M^1$ includes Mn, Al, or a combination thereof, $M^2$ includes at least one selected from the group consisting of B, Ba, Ce, Cr, F, Mg, Al, V, Ti, Fe, Zr, Zn, Si, Y, Nb, Ga, Sn, Mo, W, P, and Sr, $1.0 \leq a \leq 1.3$, $0.5 \leq x < 1.0$, $0 < y < 0.5$, and $0 < z < 0.5$.

(2) In (1) above of the present invention, there is provided the positive electrode material, wherein an arithmetic mean value of the ruggednesses of the primary particles is at least 0.85.

(3) In (1) or (2) above of the present invention, there is provided the positive electrode material, wherein the average aspect ratio of the primary particles is 1.2 to 4.0.

(4) In any one of (1) to (3) above of the present invention, there is provided the positive electrode material, wherein a ratio of the arithmetic mean value of the ruggednesses of the primary particles to the average aspect ratio of the primary particles is 0.59 to 0.95.

(5) In any one of (1) to (4) above of the present invention, there is provided the positive electrode material, wherein the single particle-based positive electrode active material includes a lithium nickel-based oxide composed of 1 to 30 primary particles; and a coating layer formed on the lithium nickel-based oxide.

(6) In (5) above of the present invention, there is provided the positive electrode material, wherein the coating layer includes at least one coating element selected from the group consisting of Al, Ti, W, B, F, P, Mg, Ni, Co, Fe, Cr, V, Cu, Ca, Zn, Zr, Nb, Mo, Sr, Sb, Bi, Si and S.

(7) In any one of (1) to (6) above of the present invention, there is provided the positive electrode material, wherein the $D_{30}$ of the positive electrode material is 2 $\mu$m to 15 $\mu$m.

(8) In any one of (1) to (7) above of the present invention, there is provided the positive electrode material, wherein the average particle diameter of the primary particles is 1 $\mu$m to 6 $\mu$m.

(9) In any one of (1) to (8) above of the present invention, there is provided the positive electrode material, wherein an arithmetic mean value of the circularities of the primary particles measured from a segmentation image partitioned for each primary particle unit obtained by image-processing a scanning electron microscope (SEM) image of the positive electrode material is at least 0.65, and the circularity is a value defined by Equation 2 below:

$$[\text{Equation 2}] \quad \text{Circularity} = 4\pi A \ / \ P^2$$

wherein, in Equation 2 above, A is the area of each primary particle measured from the segmentation image, and P is the circumference of each primary particle measured from the segmentation image.

(10) In any one of (1) to (9) above of the present invention, there is provided the positive electrode material, wherein an arithmetic mean value of the convexities of the primary particles measured from a segmentation image partitioned for each primary particle unit obtained by image-processing a scanning electron microscope (SEM) image of the positive electrode material is at least 0.92, and the convexity is a value defined by Equation 3 below:

$$[\text{Equation 3}] \quad \text{Convexity} = P_c \ / \ P_r$$

wherein, in Equation 3 above, $P_r$ is the actual circumference of each primary particle measured from the segmentation image, and $P_c$ is the circumference of a virtual figure obtained by connecting the outermost points of each primary particle measured from the segmentation image.

(11) According to another embodiment of the present invention, there is provided a positive electrode including the positive electrode material of any one of (1) to (10) above.

(12) According to yet another embodiment of the present invention, there is provided a lithium secondary battery including the positive electrode of (11) above.

## ADVANTAGEOUS EFFECTS

The positive electrode material according to the present invention includes a single particle-based positive electrode active material controlled such that a ratio of the arithmetic mean value of the ruggednesses of the primary particles to the average aspect ratio of the primary particles satisfies at least 0.58, and thus lithium mobility and rolling properties are superior to those of conventional single particle-based positive electrode active materials. Accordingly, when the positive electrode material according to the present invention is applied, a lithium secondary battery having excellent capacity characteristics and lifetime characteristics compared to the related art may be implemented.

## BRIEF DESCRIPTION OF THE DRAWINGS

FIG. 1 is a view for explaining the ruggedness according to the present invention.

FIG. 2 is a view for explaining the convexity according to the present invention.

FIG. 3 shows a scanning electron microscope (SEM) image (A) of a positive electrode material prepared in Example 1 and a segmentation image (B) obtained by image-processing the SEM image.

FIG. 4 shows a scanning electron microscope (SEM) image (A) of a positive electrode material prepared in Example 2 and a segmentation image (B) obtained by image-processing the SEM image.

FIG. 5 shows a scanning electron microscope (SEM) image (A) of a positive electrode material prepared in Example 3 and a segmentation image (B) obtained by image-processing the SEM image.

FIG. 6 shows a scanning electron microscope (SEM) image (A) of a positive electrode material prepared in Example 4 and a segmentation image (B) obtained by image-processing the SEM image.

FIG. 7 shows a scanning electron microscope (SEM) image (A) of a positive electrode material prepared in Comparative Example 1 and a segmentation image (B) obtained by image-processing the SEM image.

FIG. 8 shows a scanning electron microscope (SEM) image (A) of a positive electrode material prepared in Comparative Example 2 and a segmentation image (B) obtained by image-processing the SEM image.

FIG. 9 shows a scanning electron microscope (SEM) image (A) of a positive electrode material prepared in Comparative Example 3 and a segmentation image (B) obtained by image-processing the SEM image.

## MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

As used herein, the term "primary particle" refers to a particle unit in which an external grain boundary does not exist when observed in the view at a magnification of 5,000 to 20,000 using a scanning electron microscope.

As used herein, the term "secondary particle" is a particle formed by the aggregation of a plurality of primary particles. In the present invention, a secondary particle formed by the aggregation of at most 30 primary particles is referred to as "single particle-based positive electrode active material" in order to distinguish it from a conventional secondary particle formed by the aggregation of tens to hundreds of primary particles.

In the present invention, the term "single particle-based positive electrode active material" refers to a positive electrode active material composed of 1 to 30 primary particles having an average particle diameter of at least 1 $\mu$m, preferably 1 $\mu$m to 5 $\mu$m.

As used herein, the term "$D_{50}$" refers to a particle size based on 50% of the volume cumulative particle size distribution of the positive electrode material powder.

In the present invention, the "ruggedness" is an index indicating the surface roughness of the particle to be measured and is a value defined by Equation 1 below:

$$[\text{Equation 1}] \quad \text{Ruggedness} = A_r \ / \ A_c$$

wherein, in Equation 1 above, $A_r$ is the actual area of each primary particle measured from the segmentation image, and $A_c$ is the area of a virtual figure obtained by connecting the outermost points of each primary particle measured from the segmentation image.

In the present invention, the "circularity" is an index indicating the degree to which the particle cross-sectional shape is close to the circular shape and is a value defined by Equation 2 below:

$$[\text{Equation 2}] \quad \text{Circularity} = 4\pi A \ / \ P^2$$

In Equation 2 above, A is the area of the cross-section of the particle to be measured, and P is the circumference of the cross-section of the particle to be measured.

In the present invention, the "convexity" is an index indicating the surface roughness of the particle to be measured and is a value defined by Equation 3 below:

$$[\text{Equation 3}] \quad \text{Convexity} = P_c \ / \ P_r$$

In Equation 3 above, $P_r$ is the actual circumference of the particle to be measured, and $P_c$ is the circumference of a virtual figure obtained by connecting the outermost points of the particle to be measured.

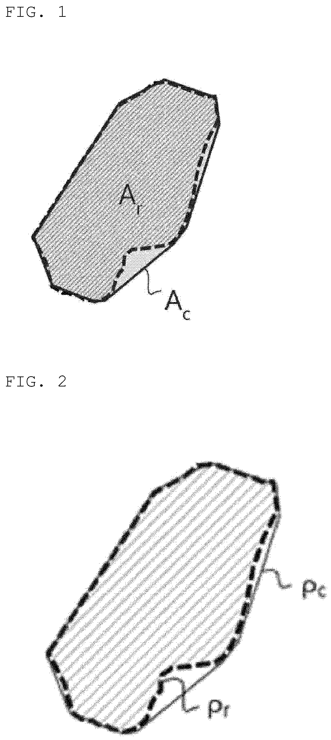

FIG. 1 is a view for explaining the meaning of the ruggedness according to the present invention. As shown in FIG. 1, $A_r$ represents the actual area of the primary particle, and $A_c$ represents the area of a virtual figure obtained by connecting the outermost points of the primary particle. If the particle surface is smoothly formed without irregularities, the values of $A_r$ and $A_c$ are similar, and thus the ruggedness is close to 1. On the other hand, when the roughness is high due to many irregularities on the particle surface, the $A_r$ value decreases, and thus the ruggedness decreases. That is, as the arithmetic mean value of the ruggedness of the primary particles constituting the single particle-based positive electrode active material decreases, there are more irregularities on the surfaces of the primary particles.

FIG. 2 is a view for explaining the meaning of the convexity according to the present invention. As shown in FIG. 2, $P_r$ represents the actual circumference of the primary particle, and $P_c$ represents the circumference of a virtual figure obtained by connecting the outermost points of the primary particle. If the particle surface is smoothly formed without irregularities, the values of $P_r$ and $P_c$ are similar, and thus the convexity is close to 1. On the other hand, when the roughness is high due to many irregularities on the particle surface, the $P_r$ value increases, and thus the convexity decreases. That is, as the arithmetic mean value of the convexity of the primary particles constituting the single particle-based positive electrode active material decreases, there are more irregularities on the surfaces of the primary particles.

Meanwhile, when the surface roughness of the particle increases, the contact area with the electrolyte increases, and the irregular portion is broken when the electrode is rolled, thereby increasing the particle breakage, which causes a decrease in lifetime characteristics. Therefore, in order to improve the lifetime characteristics of the positive electrode material, it is necessary to control the surface shape of the primary particle.

In the present invention, the ruggedness, the circularity, the convexity, the average particle diameter, and the average aspect ratio of the primary particles and the $D_{50}$ of the positive electrode material may be measured from a segmentation image partitioned for each primary particle unit obtained by image-processing a scanning electron microscope (SEM) image of the positive electrode material using an artificial intelligence model. Specifically, the segmentation image may be obtained by obtaining a scanning electron microscope (SEM) image of a positive electrode material powder to be measured, inputting the obtained scanning electron microscope image into a U-NET structure to generate a binary image, converting the binary image into a distance conversion image based on a distance conversion algorithm, filtering the binary image using a threshold value set based on the distance conversion image, identifying a plurality of objects included in the filtered binary image, and then based on the plurality of objects, segmenting the SEM image in a primary particle unit.

Hereinafter, the present invention will be described in more detail.

## Positive Electrode Material

The positive electrode material according to the present invention includes a plurality of single particle-based positive electrode active material particles, and the single particle-based positive electrode active material particle includes 1 to 30 primary particles.

The single particle-based positive electrode active material has a higher particle strength than the existing positive electrode active material in the form of a secondary particle in which tens to hundreds of primary particles are aggregated, and thus, there is less particle breakage during rolling. Also, in the case of the single particle-based positive electrode active material, the number of primary particles constituting the particles is small so that there is little change due to volume expansion and contraction of the primary particles during charging and discharging, and accordingly the occurrence of cracks inside the particles may be significantly reduced.

Therefore, when the positive electrode material according to the present invention including the single particle-based positive electrode active material is used, it is possible to minimize deterioration in electrochemical performance due to particle breakage and crack occurrence.

Meanwhile, the single particle-based positive electrode active material includes a lithium nickel-based oxide containing nickel and cobalt.

In this case, the lower limit of the nickel content in all metals excluding lithium in the lithium nickel-based oxide may be at least 50 mol%, at least 55 mol%, at least 60 mol%, at least 80 mol%, at least 85 mol%, or at least 88 mol%, and the upper limit of the nickel content in all metals excluding lithium may be less than 100 mol%, at most 99 mol%, or at most 95 mol%. When the nickel content in the lithium nickel-based oxide satisfies the above range, a high energy density may be achieved.

Specifically, the lithium nickel-based oxide may have a composition represented by Formula 1 below:

$$[\text{Formula 1}] \qquad \text{Li}_a[\text{Ni}_x\text{Co}_y\text{M}^1_z\text{M}^2_{1-x-y-z}]\text{O}_2$$

In Formula 1 above, $M^1$ may include Mn, Al, or a combination thereof, and $M^2$ may include at least one selected from the group consisting of B, Ba, Ce, Cr, F, Mg, Al, V, Ti, Fe, Zr, Zn, Si, Y, Nb, Ga, Sn, Mo, W, P, and Sr. Preferably, $M^1$ above may be Mn or a combination of Mn and Al, and $M^2$ above may include Al, Zr, Y, Mg, Ti, Ba, Sr, Mo, or a combination thereof, and more preferably Zr, Y, or a combination thereof. The $M^2$ element is not necessarily included, but if included in an appropriate amount, the $M^2$ element may serve to promote particle growth during firing the lithium nickel-based oxide or improve the crystal structure stability.

a above represents a molar ratio of lithium in the lithium nickel-based oxide, and may satisfy $1.0 \leq a \leq 1.3$, $1.0 \leq a \leq 1.2$, or $1.0 \leq a \leq 1.07$. When the molar ratio of lithium satisfies the above range, the crystal structure of the lithium nickel-based oxide may be stably formed.

x above represents a molar ratio of nickel among all metals excluding lithium in the lithium nickel-based oxide, and may satisfy $0.5 \leq x < 1.0$, $0.55 \leq x < 1.0$, $0.60 \leq x < 1.0$, $0.80 \leq x < 1.0$, $0.85 \leq x < 1.0$, $0.88 \leq x < 1.0$, $0.5 \leq x \leq 0.99$, $0.55 \leq x \leq 0.99$, $0.60 \leq x \leq 0.99$, $0.80 \leq x \leq 0.99$, $0.85 \leq x \leq 0.99$, $0.88 \leq x \leq 0.99$, $0.5 \leq x \leq 0.95$, $0.55 \leq x \leq 0.95$, $0.60 \leq x \leq 0.95$, $0.80 \leq x \leq 0.95$, $0.85 \leq x \leq 0.95$, or $0.88 \leq x \leq 0.95$. The higher the nickel molar ratio, the more advantageous the high capacity is achieved.

y above represents a molar ratio of cobalt among all metals excluding lithium in the lithium nickel-based oxide, and may satisfy $0 < y < 0.5$, $0 < y < 0.45$, $0 < y < 0.4$, $0 < y < 0.2$, $0 < y < 0.15$, or $0 < y < 0.12$.

z above represents a molar ratio of $M^1$ among all metals excluding lithium in the lithium nickel-based oxide, and may satisfy $0 < z < 0.5$, $0 < z < 0.45$, $0 < z < 0.4$, $0 < z < 0.2$, $0 < z < 0.15$, or $0 < z < 0.12$.

More specifically, the lithium nickel-based oxide may have a composition represented by Formula 1-1 below:

$$[\text{Formula 1-1}] \qquad Li_a[Ni_xCo_yMn_{z-w}Al_wM2_{1-x-y-z}]O_2$$

In Formula 1-1 above, $M^2$, a, x, y, and z are the same as in Formula 1.

Meanwhile, w represents a molar ratio of Al among metals excluding lithium in the lithium nickel-based oxide, and may satisfy $0<w<0.2$, $0<w\leq0.1$, $0<w\leq0.05$, $0<w\leq0.03$, or $0<w\leq0.02$. When the lithium nickel-based oxide has the composition of Formula 1-1 above, the structural stability and capacity characteristics of the positive electrode active material are excellent.

Meanwhile, the single particle-based positive electrode active material may further include a coating layer formed on the lithium nickel-based oxide, as necessary.

In this case, the coating layer may include at least one coating element selected from the group consisting of Al, Ti, W, B, F, P, Mg, Ni, Co, Fe, Cr, V, Cu, Ca, Zn, Zr, Nb, Mo, Sr, Sb, Bi, Si and S, and preferably, may include at least one coating element selected from the group consisting of Co, Al, B, W, Ti and Zr.

If the coating layer is present on the surface of the lithium nickel-based oxide, the contact between the electrolyte and the lithium nickel-based oxide is suppressed by the coating layer, and thus it is possible to obtain the effect of reducing the elution of transition metals or the generation of gas due to side reactions with the electrolyte.

In particular, if Co, Al, or a combination thereof is included as a coating element, the output improvement and resistance reduction effects may be obtained along with the effect of suppressing a side reaction with an electrolyte solution.

In the positive electrode material according to the present invention, a ratio of the arithmetic mean value of the ruggednesses of the primary particles to the average aspect ratio of the primary particles measured from the segmentation image partitioned for each primary particle unit obtained by image-processing a scanning electron microscope (SEM) image is at least 0.58, specifically 0.59 to 0.95, and more specifically 0.60 to 0.90. According to the research of the present inventors, it was found that the use of the positive electrode material in which the ratio of the arithmetic mean value of the ruggednesses of the primary particles to the average aspect ratio of the primary particles satisfying the above range remarkably improves the lifetime characteristics.

In this case, the ruggedness of the primary particles is a value defined by Equation 1 below:

$$[\text{Equation 1}] \quad \text{Ruggedness} = A_r \,/\, A_c$$

wherein, in Equation 1 above, $A_r$ is the actual area of each primary particle measured from the segmentation image, and $A_c$ is the area of a virtual figure obtained by connecting the outermost points of each primary particle measured from the segmentation image.

When the surface roughness of the particle increases, the contact area with the electrolyte increases, and the irregular portion is broken when the electrode is rolled, thereby increasing the particle breakage, which causes a decrease in lifetime characteristics. Therefore, in order to improve the lifetime characteristics of the positive electrode material, it is necessary to control the surface shape of the primary particle.

The particle shape analysis of the positive electrode active material is performed using an image of the positive electrode active material powder obtained through a scanning electron microscope (SEM), and in the case of the SEM image of the positive electrode material powder, it is difficult to distinguish the aggregated primary particles on image due to image resolution, particle agglomeration, surface roughness, and the like. Accordingly, conventionally, a method in which a person selects individual active material particles and/or primary particles from an SEM image and manually measures a circumference, an aspect ratio, a particle diameter, and the like of the selected particles has been used. However, in this case, there is a limitation in that quantitative analysis for a large amount of positive electrode active material particles is difficult, and the measurement value may vary depending on the measurer, and thus the analysis accuracy is deteriorated. Therefore, conventionally, it is difficult to accurately analyze the surface shape of the primary particle of the positive electrode active material, and accordingly, it is difficult to derive a correlation between the surface shape of the primary particle and the battery performance.

Accordingly, the present inventors have developed a method capable of quantitatively analyzing the surface shape of the primary particles in the positive electrode material powder through image analysis using an artificial intelligence model, and found that the lifetime characteristics of the single particle-based positive electrode material are significantly improved when the ratio of the arithmetic mean value of the ruggednesses of the primary particles to the average aspect ratio of the primary particles measured according to the analysis method is at least 0.58, thereby completing the present invention.

The shape analysis method of the positive electrode material particles according to the present invention is as follows.

First, a scanning electron microscope image of positive electrode material powder to be measured is obtained, and then the obtained scanning electron microscope image is input to an artificial intelligence model to generate a binary image. In this case, the artificial intelligence model may be a model trained to convert an active material image into a binary image, and in this case, the training data uses a SEM image of positive electrode material powder as a raw image and a binary image obtained by binarizing the SEM image as a label image. The binary image is an image obtained by binarizing the SEM image by a computer vision technique or an image obtained by manually drawing the SEM image. In addition, in order to learn various cases, an image augmentation algorithm (e.g., rotation, tilt, shear, brightness adjustment, contrast adjustment, magnification, reduction, or a combination thereof) is applied to the raw image and the label image to generate additional images, and this is utilized as training data.

Meanwhile, the sizes of the raw image and the label images may be the same. The image size may be defined as the number of horizontal pixels × the number of vertical pixels, and for example, the size of the raw image and the label image may be 256 × 256.

Meanwhile, as the artificial intelligence model, a U-NET structure capable of reflecting an input image by adding a skip connection in an encoding and decoding process is used. The artificial intelligence model may have a structure in which a plurality of layers are sequentially connected, the input of the sequentially connected layers may be the output of the layer connected immediately before the input, and the output of the sequentially connected layers may be the input of the layer connected immediately after the output. The layer included in the encoding region has a structure in which a 2D convolution layer, a batch normalization layer, an activation layer, and a max pooling layer are sequentially connected, and the layer included in the decoding region has a structure in which a 2D convolution layer, a batch normalization layer, an activation layer, and an up-sampling layer are sequentially connected.

The training of the artificial intelligence model is performed using a deep learning back propagation algorithm, a binary cross entropy loss function is used as a loss function, and as the binary cross entropy loss function is used a function in which a weight between 1 and 1000 is applied to one color of two colors (or classes) (e.g., white among black and white) as needed.

Next, the binary image generated from the artificial intelligence model is converted into a distance conversion image based on a distance conversion algorithm. In this case, the distance conversion algorithm may be a max-min normalization, Z-score normalization, L1 normalization, or L2 normalization algorithm.

Next, a filtered binary image is obtained by filtering the binary image using a threshold value set based on the distance conversion image. In this case, the threshold may be a value obtained by multiplying the normalized maximum distance of the distance conversion image by a specified ratio (e.g., 0 to 0.1). The filtering may be performed by selecting pixels having a distance value less than or equal to a specified threshold among pixels included in the distance conversion image, and setting, with a specified color value, color values of pixels corresponding to pixels selected from the distance change image among pixels included in the binary image. Through the method, a filtered image including a plurality of objects is obtained.

Next, after identifying a plurality of objects included in the filtered image, a segmentation image partitioned for each primary particle unit is obtained by segmenting the SEM image based on the plurality of objects. In this case, the segmentation is performed using Watershed algorithm.

Since the segmentation image obtained by the above-described method shows the positive electrode active material particles in the positive electrode material by being partitioned in primary particle unit, by using the segmentation image, various shape information related to the primary particles of the positive electrode active material particles (for example, the circularity, the circumference, the area, the aspect ratio, the convexity, the ruggedness of the primary particles, and the like) may be quantitatively obtained.

In addition, in the case of the above-described analysis method, since an artificial intelligence model in which a user input is minimized is utilized, an issue that a measurement value varies with a user is minimized, and thus accuracy and reproducibility are excellent.

In the positive electrode material according to the present invention, the arithmetic average value of the ruggednesses of the primary particles may be at least 0.85, specifically 0.85 to 1.0, and more specifically 0.85 to 0.98.

In the positive electrode material according to the present invention, the arithmetic mean value of the convexities of the primary particles measured from the segmentation image partitioned for each primary particle unit obtained by image-processing a scanning electron microscope image may be at least 0.92, specifically 0.92 to 1.0, and more specifically 0.92 to 0.98.

When the arithmetic average value of the ruggednesses of the primary particles and/or the arithmetic average value of the convexities of the primary particles are within the above range, the surface roughness of the particles is increased so that the contact area with the electrolyte solution is increased, and the uneven portion is broken during the rolling of the electrode so that the increase of particle breakage is prevented, thereby improving the lifetime characteristics of the battery.

In this case, the convexity of the primary particles is a value defined by Equation 3 below:

$$[\text{Equation 3}] \quad \text{Convexity} = P_c \: / \: P_r$$

wherein, in Equation 3 above, $P_r$ is the actual circumference of each primary particle measured from the segmentation image, and $P_c$ is the circumference of a virtual figure obtained by connecting the outermost points of each primary particle measured from the segmentation image.

In the positive electrode material according to the present invention, the average aspect ratio of the primary particles may be 1.2 to 4.0, and preferably 1.2 to 3.0. In this case, the aspect ratio refers to a ratio of a long diameter length to a short diameter length of the primary particle. If the average aspect ratio of the primary particles is too small, lithium mobility may be deteriorated due to poor contact between the particles, and if the average aspect ratio is too large, electrochemical performance may be deteriorated due to an increase in the diffusion distance of lithium ions inside the particles, and lithium ion diffusion in the electrode may be hindered due to a long distance between the particles.

In the positive electrode material according to the present invention, the arithmetic mean value of the circularities of the primary particles measured from the segmentation image partitioned for each primary particle unit obtained by image-processing a scanning electron microscope image may be at least 0.65, specifically 0.65 to 0.98, and more specifically 0.65 to 0.90, or 0.65 to 0.85.

When the arithmetic mean value of the circularities of the primary particles is within the above range, lithium ions may be more smoothly diffused into the particles, and the contact area between the single particle-based positive electrode active material and the electrolyte may increase, thereby improving electrochemical performance. In addition, since the distance between particles in the electrode is maintained relatively constant, current flows smoothly in the electrode, and the arrangement of particles is uniform, the mechanical stability is increased, thereby improving the cycle lifetime of the battery. In addition, within the above range, since friction between single particles increases and the distribution of the single particle-based positive electrode active material becomes non-uniform, it is possible to prevent the capacity and/or lifetime characteristics of the battery from deteriorating, and at the same time, it is possible to suppress the need for an additional process for excessive pulverization or circularization, or the occurrence of particle damage or particle breakage. In this case, the circularity of the primary particles is a value defined by Equation 2 below:

$$[\text{Equation 2}] \quad \text{Circularity} = 4\pi A \: / \: P^2$$

wherein, in Equation 2 above, A is the area of each primary particle measured from the segmentation image, and P is the circumference of each primary particle measured from the segmentation image.

The positive electrode active material according to the present invention may have a $D_{50}$ of 2 μm to 15 μm, preferably 3 μm to 10 μm, and more preferably 3 μm to 8 μm. There are limitations in that if $D_{50}$ of the positive electrode active material is too small, it is difficult to form an active material layer when the electrode is manufactured, electrochemical properties deteriorate due to poor electrolyte solution wetting, and if $D_{50}$ is too large, resistance increases and output characteristics deteriorate.

Meanwhile, in the positive electrode material according to the present invention, the average particle diameter of the primary particles may be 1 μm to 6 μm, preferably 1 μm to 5 μm, and more preferably 1 μm to 4 μm. When the average particle diameter of the primary particles satisfies the above range, a single particle-based positive electrode active material having excellent electrochemical properties may be formed. If the average particle diameter of the primary particles is too small, the number of aggregations of the primary particles that form lithium nickel-based oxide particles increases, thereby reducing the effect of suppressing the generation of particle breakage during rolling, and if the average particle diameter of the primary particles is too large, the lithium diffusion path inside the primary particles is lengthened, thereby increasing resistance and reducing output characteristics.

**Method for Preparing Positive Electrode Material**

Next, a method of preparing a positive electrode material according to the present invention will be described.

The method for preparing a positive electrode material according to the present invention includes: (1) a step of mixing a transition metal precursor and a first lithium raw material, and then performing a primary firing to form a primary fired product including a single particle-based lithium nickel-based oxide having 1 to 30 primary particles; (2) a first pulverization step of pulverizing the primary fired product; (3) a step of mixing the pulverized primary fired product and a second lithium raw material, and then performing a secondary firing to form a secondary fired product; and (4) a second pulverization step of pulverizing the secondary fired product.

**(1) Step of Forming Primary Fired Product**

First, a transition metal precursor and a first lithium raw material are mixed and then primarily fired to form a primary fired product.

In this case, the transition metal precursor may be used by purchasing a precursor such as a commercially available nickel cobalt manganese-based hydroxide or may be prepared by a precursor preparation method known in the art.

Preferably, the transition metal precursor may be a transition metal hydroxide represented by Formula 2 below:

$$[\text{Formula 2}] \qquad [Ni_{x1}Co_{y1}M^1_{z1}M^2_{1-x1-y1-z1}](OH)_2$$

In Formula 2 above, $M^1$ and $M^2$ are the same as defined in Formula 1. That is, $M^1$ includes Mn, Al, or a combination thereof, and $M^2$ includes at least one selected from the group consisting of B, Ba, Ce, Cr, F, Mg, Al, V, Ti, Fe, Zr, Zn, Si, Y, Nb, Ga, Sn, Mo, W, P, and Sr.

Meanwhile, $x1$ represents a molar ratio of nickel among all metal elements in the transition metal precursor, and may satisfy $0.5 \leq x1 < 1.0$, $0.55 \leq x1 < 1.0$, $0.60 \leq x1 < 1.0$, $0.80 \leq x1 < 1.0$, $0.85 \leq x1 < 1.0$, $0.88 \leq x1 < 1.0$, $0.5 \leq x1 \leq 0.99$, $0.55 \leq x1 \leq 0.99$, $0.60 \leq x1 \leq 0.99$, $0.80 \leq x1 \leq 0.99$, $0.85 \leq x1 \leq 0.99$, $0.88 \leq x1 \leq 0.99$, $0.5 \leq x1 \leq 0.95$, $0.55 \leq x1 \leq 0.95$, $0.60 \leq x1 \leq 0.95$, $0.80 \leq x1 \leq 0.95$, $0.85 \leq x1 \leq 0.95$, or $0.88 \leq x1 \leq 0.95$.

$y1$ above represents a molar ratio of cobalt among all metals in the transition metal precursor, and may satisfy $0 < y1 < 0.5$, $0 < y1 < 0.45$, $0 < y1 < 0.4$, $0 < y1 < 0.2$, $0 < y1 < 0.15$, or $0 < y1 < 0.12$.

$z1$ above represents a molar ratio of $M^1$ among all metals in the transition metal precursor, and may satisfy $0 < z1 < 0.5$, $0 < z1 < 0.45$, $0 < z1 < 0.4$, $0 < z1 < 0.2$, $0 < z1 < 0.15$, or $0 < z1 < 0.12$.

For example, the transition metal precursor may be prepared by forming a transition-metal aqueous solution and an ammonium cation complex, injecting a basic compound into a reactor, stirring the mixture, and performing a coprecipitation reaction.

The transition-metal aqueous solution may be prepared by dissolving a raw material containing transition metals in a solvent such as water, for example, dissolving a nickel-containing raw material or a cobalt-containing raw material in water. In addition, as necessary, the transition-metal aqueous solution may further contain an $M^1$ raw material and/or an $M^2$ metal-containing raw material.

Meanwhile, the transition metal-containing raw material may be an acetate, a carbonate, a nitrate, a sulfate, a halite, a sulfide, or an oxide of the transition metal.

Specifically, the nickel-containing raw material may be, for example, NiO, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a nickel halide, or a combination thereof.

The cobalt-containing raw material may be, for example, $CoSO_4$, $Co(OCOCH_3)_2 \cdot 4H_2O$, $Co(NO_3)_2 \cdot 6H_2O$, $CoSO_4 \cdot 7H_2O$, or a combination thereof.

The $M^1$-containing raw material may be a manganese-containing raw material and/or an aluminum-containing raw material. The manganese-containing raw material may be, for example, $Mn_2O_3$, $MnO_2$, $Mn_3O_4$ $MnCO_3$, $Mn(NO_3)_2$, $MnSO_4 \cdot H_2O$, a manganese acetate, a manganese halide, or a combination thereof, and the aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof. However, Al may not be added to the transition-metal aqueous solution, but may be added together with the lithium raw material in the firing step which will be described later.

The $M^2$-containing raw material may be an acetate, a carbonate, a nitrate, a sulfate, a halite, a sulfide, or an oxide of the $M^2$ metal.

The input amount of each transition metal-containing raw material may be determined in consideration of a molar ratio of transition metals in a positive electrode active material to be finally produced.

Meanwhile, a forming agent of the ammonium cation complex may include at least one compound selected from the group consisting of $NH_4OH$, $(NH_4)_2SO_4$, $NH_4NO_3$, $NH_4Cl$, $CH_3COONH_4$, and $NH_4CO_3$, and may be introduced into the reactor in the form of a solution in which the compound is dissolved in a solvent. In this case, as the solvent, water or a mixture of water and an organic solvent (specifically, alcohol *etc.*), which may be uniformly mixed with the water, may be used.

The basic compound may be at least one compound selected from the group consisting of NaOH, KOH, and $Ca(OH)_2$, and may be introduced into the reactor in the form of a solution in which the compound is dissolved in a solvent. In this case, as the solvent, water or a mixture of water and an organic solvent (specifically, alcohol *etc.*), which may be uniformly mixed with the water, may be used.

As described above, when the transition-metal aqueous solution, the forming agent of the ammonium cation complex, and the basic compound are introduced into the reactor and stirred, the transition metals in the transition-metal aqueous solution are co-precipitated to generate precursor particles in the form of a transition metal hydroxide.

In this case, the transition-metal aqueous solution, the forming agent of the ammonium cation complex, and the basic compound are added in an amount such that the pH of the reaction solution is within a desired range.

When the precursor particles are formed by the above method, the particles are separated from the reaction solution to obtain a transition metal precursor. For example, the transition metal precursor may be separated from the reaction solution by filtering the reaction solution, and then the separated transition metal precursor may be washed with water and dried to obtain the transition metal precursor. In this case, as necessary, processes such as pulverizing and/or classifying may be performed.

Next, the transition metal precursor and the first lithium raw material are mixed and then primarily fired to form a primary fired product including a single particle-based lithium nickel-based oxide including 1 to 30 primary particles. In this case, if necessary, the aluminum-containing raw material and/or the $M^2$ metal-containing raw material may be mixed together and fired.

As the first lithium raw material, a lithium-containing sulfate, a nitrate, an acetate, a carbonate, an oxalate, a citrate, a halide, a hydroxide, an oxyhydroxide, or the like may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

Meanwhile, the first lithium raw material may be mixed such that a ratio of the number of moles of lithium to the total number of moles of transition metals included in the transition metal precursor is 0.9 to 1.1, preferably 0.95 to 1.07, and more preferably 1 to 1.05. When the ratio of the number of moles of the transition metal precursor and the first lithium raw material satisfies the above range, the layered crystal structure of the positive electrode active material is well developed, so that a positive electrode material having excellent electrochemical performance may be prepared.

Meanwhile, the primary firing is performed under the condition in which the primary particles are grown to at least 1 μm to form a single particle-based lithium nickel-based oxide.

An appropriate primary firing temperature may vary depending on the metal composition in the precursor, and for example, when the content of nickel (Ni) is at least 80 mol%, the primary firing may be performed at a temperature of 800 °C to 950 °C, preferably 820 °C to 950 °C, and more preferably 850 °C to 950 °C.

In addition, the primary firing may be performed in an oxygen atmosphere for 5 hours to 35 hours, preferably 5 hours to 20 hours, and more preferably 5 hours to 15 hours.

In addition, the primary firing may be performed in an oxygen atmosphere. In the present specification, the oxygen atmosphere refers to an atmosphere containing a sufficient amount of oxygen for firing, the atmosphere including an air atmosphere. In particular, it is preferable to perform the firing in an atmosphere having an oxygen partial pressure higher than the air atmosphere.

When the primary firing is performed under the above conditions, a single particle-based lithium nickel-based oxide having excellent electrochemical properties may be formed. When the primary firing temperature and time are too small, the primary particles do not sufficiently grow, so that a positive electrode active material in the form of secondary particle is prepared, and when the primary firing temperature and time are too great, an electrically inactive rock-salt phase is excessively formed during the firing process, thereby preparing a fired product which is structurally unstable and has a low crystallinity, resulting in the deterioration of electrochemical properties.

**(2) First Pulverization Step**

When the primary fired product is formed by the primary firing as described above, a first pulverization step of pulverizing the primary fired product is performed.

The first pulverization step is for disintegrating the aggregated positive electrode active materials and appropriately adjusting the particle size and shape of the particles in the positive electrode material, and may be performed using a pulverizing device well known in the art, such as a jet-mill pulverizer or a ball-mill pulverizer.

In the first pulverization step, by appropriately adjusting pulverization conditions such as pulverization pressure and classification speed, the particle size distribution ($D_{50}$) of the lithium nickel-based oxide particles and the shape and aspect ratio of the primary particles may be adjusted.

For example, the first pulverization step may be performed under a pulverization pressure condition of 1.5 bar to 2.5 bar, preferably 1.5 bar to 2.4 bar, and more preferably 1.5 bar to 2.3 bar. When the pulverization pressure of the first pulverization step satisfies the above range, it is easy to prepare positive electrode materials having an arithmetic mean value of the desired convexities of the primary particles.

In addition, the first pulverization step may be performed at a classification speed of 800 rpm to 1,800 rpm, preferably 900 rpm to 1,800 rpm, and more preferably 900 rpm to 1,700 rpm. When the classification speed of the first pulverization step satisfies the above range, it is easy to adjust the $D_{30}$ of the positive electrode material and/or the average particle diameter of the primary particles to a desired range.

**(3) Step of Forming a Secondary Fired Product**

Next, the primary fired product pulverized through the first pulverization step and the second lithium raw material are mixed and then secondarily fired.

In this case, as the second lithium raw material, a lithium-containing sulfate, a nitrate, an acetate, a carbonate, an oxalate, a citrate, a halide, a hydroxide, an oxyhydroxide, or the like may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used. The second lithium raw material may be the same as or different from the first lithium raw material.

Meanwhile, the second lithium raw material may be mixed such that a ratio of the number of moles of lithium to the total number of moles of transition metals included in the transition metal precursor is 0.005 to 0.1, preferably 0.005 to 0.05, and more preferably 0.005 to 0.04. When the input amount of the second lithium raw material satisfies the above range, it is easy to prepare a positive electrode material having primary particles of a desired shape without deteriorating the physical properties of the positive electrode material. When the secondary firing is performed without injecting the second lithium raw material, there is a limitation in that a high temperature and long-term firing are required due to a slow reaction rate, and even when the second lithium raw material is injected, if the input amount is too small, the effect of reducing the rock salt structure on the surface of the single particle-based lithium nickel-based oxide is insignificant, and if the input amount is too large, the lithium by-products may increase, thereby deteriorating electrochemical performance.

When the secondary firing is performed by additionally injecting the second lithium raw material as described above, lithium is intercalated into the rock salt structure that may be formed on the surface of the single particle-based lithium nickel-based oxide and is restored to the layered structure, thereby improving crystallinity, and the surface of the primary particles is smoothly formed during the secondary firing process, thereby making it easy to prepare a positive electrode material having a desired convexity.

Meanwhile, the secondary firing may be performed at a temperature lower than the primary firing temperature by 50 °C to 100 °C. When the secondary firing temperature is higher than the primary firing temperature, the surface of the lithium nickel-based oxide is deteriorated due to the excessive occurrence of a rock salt phase on the surface thereof, and lithium by-products remain, thereby deteriorating electrochemical properties. When the secondary firing is performed at a temperature lower than the primary firing temperature by at least 100 °C, the intercalation rate of lithium is reduced, thereby deteriorating electrochemical performance, and the effect of improving the convexity of primary particles is insignificant. For example, the secondary firing temperature may be 700 °C to 850 °C, preferably 750 °C to 850 °C, and more preferably 750 °C to 840 °C.

Meanwhile, the secondary firing time may be, for example, 5 hours to 35 hours, preferably 5 hours to 20 hours, and more preferably 5 hours to 15 hours in terms of increasing the crystallinity of the internal crystal structure of the positive electrode active material.

In addition, the secondary firing may be performed in an oxygen atmosphere.

When the secondary firing is performed under the above conditions, the positive electrode material having excellent electrochemical properties and having a desired primary particle shape may be easily formed.

**(4) Second Pulverization Step**

Next, a second pulverization step of pulverizing the secondary fired product obtained through the secondary firing is performed. In this case, it is preferable that the pulverization pressure of the second pulverization step is smaller than that of the first pulverization step. When the pulverization pressure of the second pulverization step is greater than that of the first pulverization step, the pulverization is excessively performed, and thus it is difficult to form the surface shape of the primary particles in a desired range, and in severe cases, the single particle-based lithium nickel-based oxide particles may have the occurrence of a fracture surface.

For example, the second pulverization step may be performed under a pulverization pressure condition of 0.4 bar to 1.4 bar, 0.5 bar to 1.4 bar, or 0.6 bar to 1.3 bar.

In addition, the second pulverization step may be performed at a classification speed of 800 rpm to 1,800 rpm, preferably 900 rpm to 1,800 rpm, and more preferably 900 rpm to 1,700 rpm. When the classification speed of the second pulverization step satisfies the above range, it is easy to adjust the D50 and/or the average particle diameter of the primary particles to a desired range.

**(5) Coating Step**

Meanwhile, the method for preparing a positive electrode material according to the present invention may further include, as necessary, after the second pulverization step, a step of mixing the pulverized second fired product with a coating raw material and then performing heat treatment to form a coating layer.

The coating raw material may be an acetate, a carbonate, a nitrate, a sulfate, a halide, a sulfide, an oxide, or the like including a coating element.

Meanwhile, the mixing may be performed by solid-phase mixing or liquid-phase mixing, and the heat treatment may be performed at an appropriate temperature according to the type of element to be coated. For example, the heat treatment may be performed at a temperature of 200 °C to 800 °C, and preferably 400 °C to 750 °C. In addition, the heat treatment may be performed in two or more steps at different temperatures.

The heat treatment may be performed for 1 hour to 10 hours, specifically 2 hours to 8 hours, and more specifically 3 hours to 6 hours in order to increase the crystallinity of the coating portion.

The positive electrode material prepared according to the above method includes a plurality of single particle-based positive electrode active material. In addition, a ratio of the arithmetic mean value of the ruggednesses of the primary particles to the average aspect ratio of the primary particles when measured from the segmentation image partitioned for each primary particle unit obtained by image-processing a scanning electron microscope (SEM) image may be at least 0.58. In addition, other physical properties of the positive electrode material according to the present invention may be satisfied.

**Positive Electrode**

Next, a positive electrode according to the present invention will be described.

The positive electrode according to the present invention includes a positive electrode active material layer including the positive electrode material according to the present invention. Specifically, the positive electrode includes a positive electrode current collector and a positive electrode active material layer which is formed on the positive electrode current collector and includes the positive electrode material.

In the positive electrode, the positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. For example, the positive electrode current collector may be used in various shapes such as a film, a sheet, a foil, a net, a porous body, a foam body, and a non-woven fabric body.

Also, the positive electrode active material layer may include a conductive agent and a binder together with the above-described positive electrode material.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the positive electrode active material layer.

The binder serves to improve the adhesion between the positive electrode active material particles and the adhesion between the positive electrode active material and the positive electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

The positive electrode may be prepared according to a typical method of preparing a positive electrode. For example, the positive electrode may be prepared by mixing a positive electrode material, a binder, and/or a conductive agent in a solvent to prepare a positive electrode slurry, applying the positive electrode slurry on a positive electrode current collector, and then drying and rolling the positive electrode current collector.

The solvent may be a solvent normally used in the art. The solvent may include dimethyl sulfoxide (DMSO), isopropyl alcohol, N-methylpyrrolidone (NMP), acetone, or water, and any one alone thereof or a mixture of two or more thereof may be used. An amount of the solvent used may be sufficient when the solvent may dissolve or disperse the positive electrode material, the conductive agent, and the binder in consideration of an application thickness of a slurry and production yield, and may allow to have a viscosity that may provide excellent thickness uniformity during the subsequent application for the preparation of the positive electrode.

Alternatively, the positive electrode may be prepared by casting the positive electrode slurry on a separate support and then laminating a film separated from the support on the positive electrode current collector.

## Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator interposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, sintered carbon, copper or stainless steel that is surface-treated with one of carbon, nickel, titanium, silver, or the like, and an aluminum-cadmium alloy may be used. Also, the negative electrode current collector may typically have a thickness of 3 $\mu$m to 500 um, and, similar to the positive electrode current collector, microscopic irregularities may be formed on the surface of the current collector to enhance the adhesion of the negative electrode active material. For example, the negative electrode current collector may be used in various shapes such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOs ($0<\beta<2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

The negative electrode active material layer may be prepared by, for example, coating, on a negative electrode current collector, a negative electrode slurry containing a negative electrode active material, and optionally a binder and a conductive agent and drying the coated negative electrode current collector, or by casting the negative electrode slurry on a separate support and then laminating a film separated from the support on the negative electrode current collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, additives may be additionally included in the electrolyte in addition to the above electrolyte components. For example, any one alone or a mixture of a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, an ammonium salt, pyrrole, 2-methoxy ethanol, or aluminum trichloride may be used as the additive, but the embodiment of the present invention is not limited thereto. The additive may be included in an amount of 0.1 wt% to 10 wt%, preferably, 0.1 wt% to 5 wt% with respect to the total weight of the electrolyte.

Hereinafter, examples of the present invention will be described in detail so that a person with ordinary skill in the art to which the present invention pertains can easily carry out the present invention. The invention may, however, be embodied in many different forms and should not be construed as being limited to the examples set forth herein.

**Example 1**

$Ni_{0.885}Co_{0.035}Mn_{0.08}(OH)_2$ of a transition metal precursor having a $D_{50}$ of 4.20 $\mu m$ and LiOH were mixed so that a ratio of the number of moles of Ni+Co+Mn:Li was 1:1.03, and $Al(OH)_3$, $Y_2O_3$, and $ZrO_2$ were added thereto in amounts of 1,470 ppm, 1,000 ppm, and 1,500 ppm, respectively, with respect to the total weight of the transition metal precursor to prepare a mixture. Then, the mixture was primarily fired at 890 °C to 900 °C for 6 hours to obtain a primary fired product.

Then, the primary fired product was finely pulverized at room temperature using a jet-mill pulverizer under the conditions of a pulverization pressure of 2.1 bar and a classification speed of 1,600 rpm (a first pulverization step).

Next, the pulverized primary fired product and LiOH were mixed so that a ratio of the number of moles of Ni+Co+Mn:Li was 1:0.01, and the mixture was secondarily fired at 820 °C for 9 hours to obtain a secondary fired product.

Then, the secondary fired product was finely pulverized at room temperature at a pulverization pressure of 0.9 bar and a classification speed of 1,600 rpm using a jet-mill pulverizer to obtain $LiNi_{0.8784}Co_{0.0347}Mn_{0.0794}Al_{0.005}Zr_{0.0015}Y_{0.001}O_2$ of a single particle-based lithium nickel-based oxide (a second pulverization step).

Next, the single particle-based lithium nickel-based oxide obtained above was uniformly mixed with $Co(OH)_2$ and $Al(OH)_3$, and then heat-treated at 700 °C for 5 hours in an oxygen atmosphere, followed by heat-treatment at 500 °C for 3 hours to prepare a positive electrode material on which a coating layer was formed. In this case, the $Co(OH)_2$ was mixed in an amount such that a ratio (B/A) of the number of moles (B) of Co in $Co(OH)_2$ to the total number of moles (A) of the remaining metals excluding lithium in the lithium nickel-based oxide was 0.02, and the $Al(OH)_3$ was mixed in an amount of 0.05 parts by weight with respect to 100 parts by weight of the lithium nickel-based oxide.

**Example 2**

A positive electrode material was prepared in the same manner as in Example 1, except that the first pulverization step was performed at a pulverization pressure of 1.6 bar.

**Example 3**

$Ni_{0.885}Co_{0.035}Mn_{0.08}(OH)_2$ of a transition metal precursor having a $D_{50}$ of 4.2 μm and LiOH were mixed so that a ratio of the number of moles of Ni+Co+Mn:Li was 1:1, and $Al(OH)_3$, $Y_2O_3$, and $ZrO_2$ were added thereto in amounts of 1,470 ppm, 1,000 ppm, and 1,500 ppm, respectively, with respect to the total weight of the transition metal precursor to prepare a mixture. Then, the mixture was primarily fired at 850 °C for 12 hours to obtain a primary fired product.

Then, the primary fired product was finely pulverized at room temperature using a jet-mill pulverizer under the conditions of a pulverization pressure of 2.1 bar and a classification speed of 1,600 rpm (a first pulverization step).

Next, the pulverized primary fired product and LiOH were mixed so that a ratio of the number of moles of Ni+Co+Mn:Li was 1:0.05, and the mixture was secondarily fired at 800 °C for 12 hours to obtain a secondary fired product.

Then, the secondary fired product was finely pulverized at room temperature at a pulverization pressure of 0.9 bar and a classification speed of 1,600 rpm using a jet-mill pulverizer to obtain $LiNi_{0.8784}Co_{0.0347}Mn_{0.0794}Al_{0.005}Zr_{0.0013}Y_{0.001}O_2$ of a single particle-based lithium nickel-based oxide (a second pulverization step).

Next, the single particle-based lithium nickel-based oxide obtained above was uniformly mixed with $Co(OH)_2$, and then heat-treated at 700 °C for 5 hours in an oxygen atmosphere to form a Co coating layer on the surface of the single particle-based lithium nickel-based oxide. Then, the Co-coated single particle-based lithium nickel-based oxide and $Al(OH)_3$ were uniformly mixed and then heat-treated at 500 °C for 5 hours in an oxygen atmosphere to form a Co- and Al-coated single particle-based lithium nickel-based oxide. In this case, the $Co(OH)_2$ was mixed in an amount such that a ratio (B/A) of the number of moles (B) of Co in $Co(OH)_2$ to the total number of moles (A) of the remaining metals excluding lithium in the lithium nickel-based oxide was 0.02, and the $Al(OH)_3$ was mixed in an amount of 0.05 parts by weight with respect to 100 parts by weight of the lithium nickel-based oxide.

**Example 4**

$Ni_{0.905}Co_{0.085}Mn_{0.01}(OH)_2$ of a transition metal precursor having a $D_{50}$ of 5.50 μm and LiOH were mixed so that a ratio of the number of moles of Ni+Co+Mn:Li was 1:1, and $Al(OH)_3$, $Y_2O_3$, and $ZrO_2$ were added thereto in amounts of 1,470 ppm, 1,000 ppm, and 1,500 ppm, respectively, with respect to the total weight of the transition metal precursor to prepare a mixture. Then, the mixture was primarily fired at 820 °C for 12 hours to obtain a primary fired product.

Then, the primary fired product was finely pulverized at room temperature using a jet-mill pulverizer under the conditions of a pulverization pressure of 1.5 bar and a classification speed of 1,250 rpm (a first pulverization step).

Next, the pulverized primary fired product and LiOH were mixed so that a ratio of the number of moles of Ni+Co+Mn:Li was 1:0.03, and the mixture was secondarily fired at 770 °C for 12 hours to obtain a secondary fired product.

Then, the secondary fired product was finely pulverized at room temperature at a pulverization pressure of 0.6 bar and a classification speed of 1,250 rpm using a jet-mill pulverizer to obtain $LiNi_{0.8982}Co_{0.0844}Mn_{0.0099}Al_{0.005}Zr_{0.0015}Y_{0.001}O_2$ of a single particle-based lithium nickel-based oxide (a second pulverization step).

Next, the single particle-based lithium nickel-based oxide obtained above was uniformly mixed with $Co(OH)_2$ and $Al(OH)_3$, and then heat-treated at 700 °C for 5 hours in an oxygen atmosphere, followed by heat-treatment at 500 °C for 3 hours to prepare a positive electrode material on which a coating layer was formed. In this case, the $Co(OH)_2$ was mixed in an amount such that a ratio (B/A) of the number of moles (B) of Co in $Co(OH)_2$ to the total number of moles (A) of the remaining metals excluding lithium in the lithium nickel-based oxide was 0.02, and the $Al(OH)_3$ was mixed in an amount of 0.05 parts by weight with respect to 100 parts by weight of the lithium nickel-based oxide.

**Comparative Example 1 - Preparation of OS instead of TS**

$Ni_{0.885}Co_{0.035}Mn_{0.08}(OH)_2$ of a transition metal precursor having a $D_{50}$ of 4.20 μm and LiOH were mixed so that a ratio of the number of moles of Ni+Co+Mn:Li was 1:1.05, and $Al(OH)_3$, $Y_2O_3$, and $ZrO_2$ were mixed in amounts of 1,470 ppm, 1,000 ppm, and 1,500 ppm, respectively, with respect to the total weight of the transition metal precursor to prepare a mixture.

Then, the mixture was fired at 880 °C for 3 hours, and then fired again at 800 °C for 9 hours, and then finely pulverized to have a $D_{30}$ of 3.8 μm at a pulverization pressure of 2.1 bar and a classification speed of 1,600 rpm at room temperature using a jet-mill pulverizer to obtain $LiNi_{0.8784}Co_{0.0347}Mn_{0.0794}Al_{0.005}Zr_{0.0013}Y_{0.001}O_2$ of a single particle-based lithium nickel oxide.

Next, the single particle-based lithium nickel-based oxide obtained above was uniformly mixed with $Co(OH)_2$ and $Al(OH)_3$, and then heat-treated at 700 °C for 5 hours in an oxygen atmosphere, followed by heat-treatment at 500 °C for 3 hours to prepare a positive electrode material on which a coating layer was formed. In this case, the $Co(OH)_2$ was mixed in an amount such that a ratio (B/A) of the number of moles (B) of Co in $Co(OH)_2$ to the total number of moles (A) of the remaining metals excluding lithium in the lithium nickel-based oxide was 0.02, and the $Al(OH)_3$ was mixed in an amount of 0.05 parts by weight with respect to 100 parts by weight of the lithium nickel-based oxide.

**Comparative Example 2 - Perform second pulverization under higher pulverization pressure than first pulverization**

A positive electrode material was prepared in the same manner as in Example 1, except that the first pulverization step was performed at a pulverization pressure of 1.6 bar and the second pulverization step was performed at a pulverization pressure of 2.1 bar.

**Comparative Example 3 - Perform only second pulverization without first pulverization**

A positive electrode material was prepared in the same manner as in Example 1, except that the primary fired product was not pulverized, the secondary firing was performed, and the secondary fired product was pulverized at a pulverization pressure of 2.1 bar.

[Table 1]

| | Primary firing | Primary pulverization | Secondary firing | Secondary pulverization |
|---|---|---|---|---|
| Example 1 | 890-900 °C, 6 hr | 2.1 bar, 1,600 rpm | 820 °C, 9 hr | 0.9 bar, 1,600 rpm |
| Example 2 | 890-900 °C, 6 hr | 1.6 bar, 1,600 rpm | 820 °C, 9 hr | 0.9 bar, 1,600 rpm |
| Example 3 | 850 °C, 12 hr | 2.1 bar, 1,600 rpm | 800 °C, 12 hr | 0.9 bar, 1,600 rpm |
| Example 4 | 820 °C, 12 hr | 1.5 bar, 1,250 rpm | 770 °C, 12 hr | 0.6 bar, 1,250 rpm |
| Comparative Example 1 | 890 °C, 3 hr, 800 °C, 9 hr | 2.1 bar, 1,600 rpm | X | X |
| Comparative Example 2 | 890-900 °C, 6 hr | 1.6 bar, 1,600 rpm | 820 °C, 9 hr | 2.1 bar, 1,600 rpm |
| Comparative Example 3 | 890-900 °C, 6 hr | X | 820 °C, 8 hr | 2.1 bar, 1,600 rpm |

**Experimental Example 1**

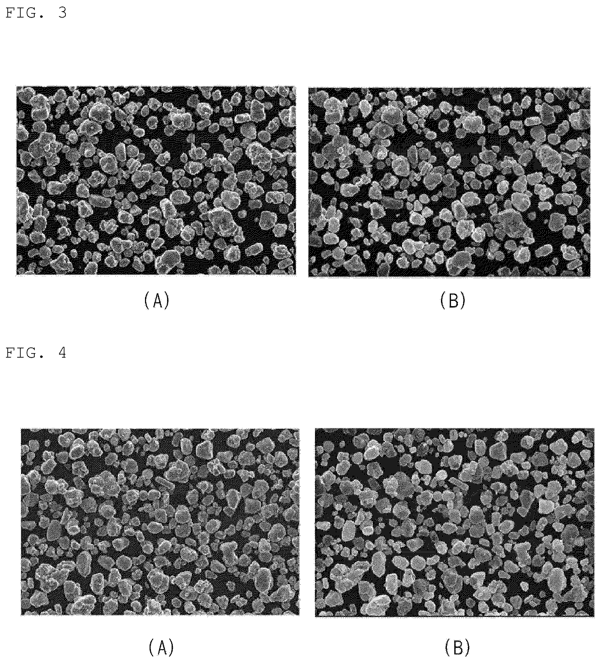

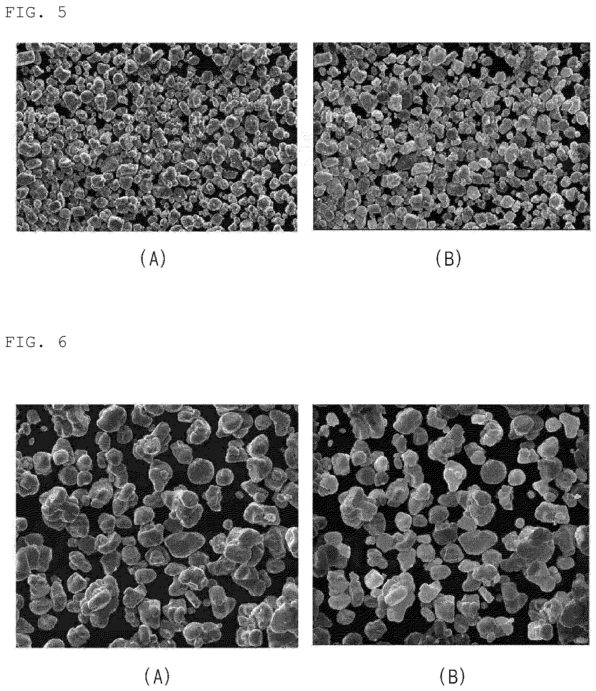

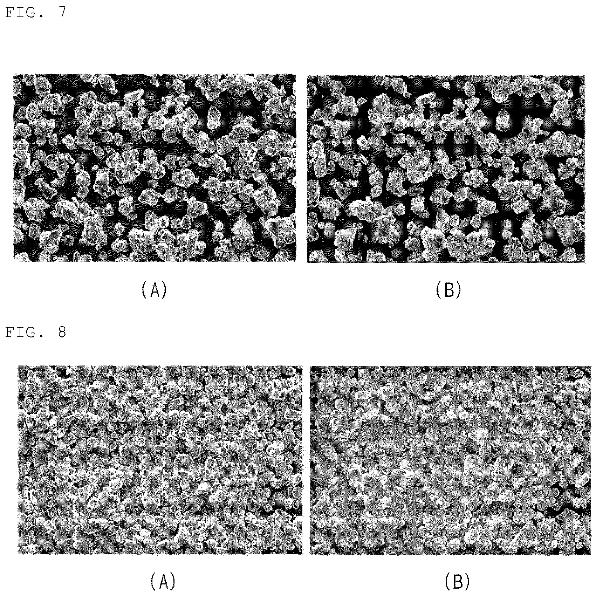

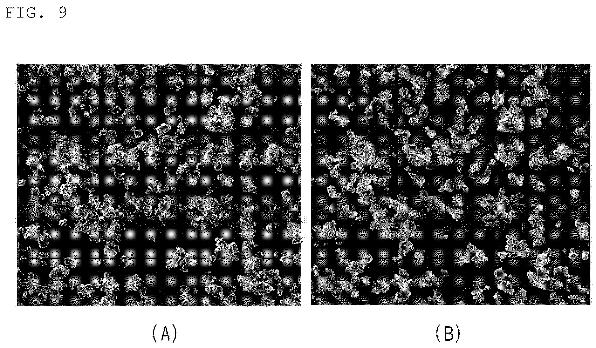

Scanning electron microscope images of the positive electrode materials prepared in Examples 1 to 4 and Comparative Examples 1 to 3 were obtained through a scanning electron microscope, and each of the images was image-processed by the above-described particle shape analysis method to obtain segmentation images partitioned for each primary particle unit. The SEM image and segmentation image of each positive electrode material prepared in Examples 1 to 4 and Comparative Examples 1 to 3 are shown in FIGS. 3 to 9. In FIGS. 3 to 9, (A) is an SEM image, and (B) is a segmentation image obtained by image-processing the SEM image.

From the segmentation image, an arithmetic mean value of the ruggednesses of the primary particles, an arithmetic mean value of the circularities of the primary particles, an arithmetic mean value of the convexities of the primary particles, an average particle diameter of primary particles, and an average aspect ratio of primary particles were measured.

In addition, the positive electrode material powders prepared in Examples 1 to 4 and Comparative Examples 1 to 3 were collected by 0.01 g, put into a vial containing 30 mL of ultrapure water and 500 $\mu$L of a dispersant, dispersed with a sonicator for 1 minute, and then placed in a particle size analyser (PSA) (S3500, made by Microtrac Inc.) to measure the $D_{50}$ of each of the positive electrode material powders.

Measurement results are listed in Table 2 below.

[Table 2]

| | Rugged ness arithmetic mean value | Average aspect ratio of primary particles | Ratio of arithmetic mean value of ruggedne sses of primary particles to average aspect ratio of primary particles | Convexity arithmetic mean value | Circularity arithmetic mean value | Average particle diameter ($\mu$m) of primary particles | $D_{50}$ ($\mu$m) |
|---|---|---|---|---|---|---|---|
| Example 1 | 0.9121 | 1.3873 | 0.6574 | 0.9364 | 0.7226 | 3.0623 | 3.82 |
| Example 2 | 0.9078 | 1.4079 | 0.6448 | 0.9362 | 0.7153 | 2.9902 | 3.70 |
| Example 3 | 0.8845 | 1.4093 | 0.6276 | 0.9274 | 0.6791 | 2.7369 | 3.87 |
| Example 4 | 0.8888 | 1.4383 | 0.6180 | 0.9279 | 0.6807 | 4.0252 | 6.17 |
| Comparative Example 1 | 0.8402 | 1.5473 | 0.5430 | 0.8726 | 0.5647 | 2.8236 | 3.78 |
| Comparative Example 2 | 0.8387 | 1.4768 | 0.5679 | 0.9114 | 0.6116 | 2.3134 | 3.41 |
| Comparative Example 3 | 0.8328 | 1.4630 | 0.5692 | 0.9113 | 0.6266 | 2.3837 | 4.07 |

**Experimental Example 2**

The positive electrode materials prepared in Examples 1 to 4 and Comparative Examples 1 to 3, a conductive agent (FX35), and a binder (a mixture of KF9700 and BM730H in a weight ratio of 2.8:0.2) were mixed in N-methylpyrrolidone at a weight ratio of 95:2:3 to prepare a positive electrode slurry. The positive electrode slurry was applied on one surface of an aluminum current collector, dried at 130 °C, and then rolled to prepare a positive electrode.

An electrode assembly was prepared by interposing a porous polyethylene separator between each of the prepared positive electrodes and a Li metal disk, then placed inside a battery case, and an electrolyte solution was injected to prepare a half-cell. The electrolyte solution was prepared by dissolving $LiPF_6$ at a concentration of 1 M in a mixed organic solvent in which ethylene carbonate:ethylmethyl carbonate:diethyl carbonate were mixed in a volume ratio of 3:3:4.

(1) Initial Capacity

Each of the lithium secondary batteries prepared above was charged at 25 °C in a CC/CV mode until 4.25 V under the 0.1 C and 0.5 C cut-off conditions, and then discharged to 2.5 V in a CC mode to measure an initial discharge capacity.

(2) Lifetime Characteristics

For each of the lithium secondary batteries prepared above, 50 cycles of charging and discharging were repeated at 45 °C in the voltage range of 2.5 V to 4.25 V, and the capacity retention rate and resistance increase rate at the 50th cycle were measured. At this time, the charging was performed up to 4.25 V in the CC/CV mode, and when reaching 0.05 C, the cut-off was performed, and the discharging was performed until 2.5 V in the CC mode.

The capacity retention rate was measured as a percentage of the discharge capacity after 50 cycles to the discharge capacity after one cycle ((discharge capacity after 50 cycles/discharge capacity after one cycle) $\times$ 100), and the resistance increase rate was measured as a percentage of the resistance after 50 cycles to the resistance after one cycle (\{(resistance after 50 cycles - resistance after one cycle)/resistance after one cycle)\} $\times$ 100).

Measurement results are presented in Table 3 below.

[Table 3]

| | Initial charge capacity (mAh/g) | Initial discharge capacity (mAh/g) | Initial efficiency (%) | Capacity retention (%) | Resistance increase rate (%) |
|---|---|---|---|---|---|
| Example 1 | 231.4 | 206.5 | 89.2 | 96.5 | 40.3 |
| Example 2 | 230.9 | 205.9 | 89.2 | 96.3 | 42.0 |
| Example 3 | 232.0 | 205.0 | 88.4 | 96.3 | 46.8 |
| Example 4 | 233.1 | 206.3 | 88.5 | 96.0 | 50.5 |
| Comparative Example 1 | 230.7 | 201.8 | 87.5 | 95.2 | 64.2 |
| Comparative Example 2 | 230.3 | 203.4 | 88.3 | 94.7 | 58.1 |
| Comparative Example 3 | 228.8 | 201.2 | 87.9 | 95.6 | 67.4 |

Referring to Table 3 above, it may be confirmed that the batteries to which the positive electrode materials of Examples 1 to 4, in which a ratio of the arithmetic mean value of the ruggednesses of the primary particles to the average aspect ratio of the primary particles is at least 0.58, have been applied have excellent capacity retention after 50 cycles and have low resistance increase compared to the batteries to which the positive electrode materials of Comparative Examples 1 to 3 have been applied.

**Claims**

1. A positive electrode material comprising a plurality of single particle-based positive electrode active material particles,

   wherein the single particle-based positive electrode active material particle comprises 1 to 30 primary particles, a ratio of an arithmetic mean value of the ruggednesses of the primary particles to an average aspect ratio of the primary particles, which are measured from the segmentation image partitioned for each primary particle unit obtained by image-processing the scanning electron microscope (SEM) image of the positive electrode material, is at least 0.58,
   the ruggedness is defined by Equation 1 below, and
   the single particle-based positive electrode active material comprises a lithium nickel-based oxide having a composition represented by Formula 1 below:

$$[\text{Equation 1}] \quad \text{Ruggedness} = A_r \, / \, A_c$$

   wherein, in Equation 1 above, $A_r$ is the actual area of each primary particle measured from the segmentation image, and $A_c$ is the area of a virtual figure obtained by connecting the outermost points of each primary particle measured from the segmentation image, and

$$[\text{Formula 1}] \qquad Li_a[Ni_xCo_yM^1_zM^2_{1-x-y-z}]O_2$$

   wherein, in Formula 1 above, $M^1$ comprises Mn, Al, or a combination thereof, $M^2$ comprises at least one selected from the group consisting of B, Ba, Ce, Cr, F, Mg, Al, V, Ti, Fe, Zr, Zn, Si, Y, Nb, Ga, Sn, Mo, W, P, and Sr, $1.0 \leq a \leq 1.3$, $0.5 \leq x < 1.0$, $0 < y < 0.5$, and $0 < z < 0.5$.

2. The positive electrode material of claim 1, wherein the arithmetic mean value of the ruggednesses of the primary particles is at least 0.85.

3. The positive electrode material of claim 1, wherein the average aspect ratio of the primary particles is 1.2 to 4.0.

4. The positive electrode material of claim 1, wherein the ratio of the arithmetic mean value of the ruggednesses of the primary particles to the average aspect ratio of the primary particles is 0.59 to 0.95.

5. The positive electrode material of claim 1, wherein the single particle-based positive electrode active material comprises a lithium nickel-based oxide composed of 1 to 30 primary particles; and a coating layer formed on the lithium nickel-based oxide.

6. The positive electrode material of claim 5, wherein the coating layer comprises at least one coating element selected from the group consisting of Al, Ti, W, B, F, P, Mg, Ni, Co, Fe, Cr, V, Cu, Ca, Zn, Zr, Nb, Mo, Sr, Sb, Bi, Si and S.

7. The positive electrode material of claim 1, wherein the $D_{50}$ of the positive electrode material is 2 $\mu$m to 15 $\mu$m.

8. The positive electrode material of claim 1, wherein the average particle diameter of the primary particles is 1 $\mu$m to 6 $\mu$m.

9. The positive electrode material of claim 1, wherein an arithmetic mean value of the circularities of the primary particles measured from a segmentation image partitioned for each primary particle unit obtained by image-processing a scanning electron microscope (SEM) image of the positive electrode material is at least 0.65, and the circularity is a value defined by Equation 2 below:

$$[\text{Equation 2}] \quad \text{Circularity} = 4\pi A \ / \ P^2$$

wherein, in Equation 2 above, A is the area of each primary particle measured from the segmentation image, and P is the circumference of each primary particle measured from the segmentation image.

10. The positive electrode material of claim 1, wherein an arithmetic mean value of the convexities of the primary particles measured from a segmentation image partitioned for each primary particle unit obtained by image-processing a scanning electron microscope (SEM) image of the positive electrode material is at least 0.92, and the convexity is a value defined by Equation 3 below:

$$[\text{Equation 3}] \quad \text{Convexity} = P_c \ / \ P_r$$

wherein, in Equation 3 above, $P_r$ is the actual circumference of each primary particle measured from the segmentation image, and $P_c$ is the circumference of a virtual figure obtained by connecting the outermost points of each primary particle measured from the segmentation image.

11. A positive electrode comprising the positive electrode material according to any one of claims 1 to 10.

12. A lithium secondary battery comprising the positive electrode of claim 11.

FIG. 1

FIG. 2

FIG. 3

(A)                                    (B)

FIG. 4

(A)                                    (B)

FIG. 5

(A)                      (B)

FIG. 6

(A)                      (B)

FIG. 7

(A)

(B)

FIG. 8

(A)

(B)

FIG. 9

(A)                    (B)

## INTERNATIONAL SEARCH REPORT

| | International application No. |
|---|---|
| | **PCT/KR2024/006693** |

| A. | CLASSIFICATION OF SUBJECT MATTER |
|---|---|

**H01M 4/36**(2006.01)i; **H01M 4/525**(2010.01)i; **C01G 53/00**(2006.01)i; **H01M 4/131**(2010.01)i; **H01M 10/052**(2010.01)i; **C30B 29/22**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 10/0525(2010.01); H01M 4/02(2006.01); H01M 4/505(2010.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극재(cathode material), 단입자(single particle), 종횡비(aspect ratio), 견고도(hardness), 코팅층(coating layer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0106043 A (UMICORE et al.) 10 September 2020 (2020-09-10)<br>See paragraphs [0008], [0012], [0013] and [0033]; and claims 1, 4 and 7. | 1-12 |
| X | KR 10-2023-0054296 A (LG CHEM, LTD.) 24 April 2023 (2023-04-24)<br>See paragraphs [0016], [0043] and [0048]; and claims 1, 4-6, 10 and 11. | 1-12 |
| A | KR 10-2023-0038124 A (LG ENERGY SOLUTION, LTD.) 17 March 2023 (2023-03-17)<br>See entire document. | 1-12 |
| A | WO 2021-246186 A1 (GS YUASA INTERNATIONAL LTD.) 09 December 2021 (2021-12-09)<br>See entire document. | 1-12 |
| A | CN 110233253 A (INSTITUTE OF CHEMISTRY, CHINESE ACADEMY OF SCIENCES) 13 September 2019 (2019-09-13)<br>See entire document. | 1-12 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2024** | **26 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006693**

| Patent document cited in search report | | | Publication date (day/month/year) | Patent family member(s) | | | Publication date (day/month/year) |
|---|---|---|---|---|---|---|---|
| KR | 10-2020-0106043 | A | 10 September 2020 | CN | 111788724 | A | 16 October 2020 |
| | | | | CN | 111788724 | B | 27 October 2023 |
| | | | | EP | 3774661 | A1 | 17 February 2021 |
| | | | | EP | 3774661 | B1 | 27 July 2022 |
| | | | | JP | 2021-507486 | A | 22 February 2021 |
| | | | | JP | 2021-508410 | A | 04 March 2021 |
| | | | | JP | 2021-515966 | A | 24 June 2021 |
| | | | | JP | 2021-516422 | A | 01 July 2021 |
| | | | | JP | 2021-517721 | A | 26 July 2021 |
| | | | | JP | 6905156 | B2 | 21 July 2021 |
| | | | | JP | 7052072 | B2 | 11 April 2022 |
| | | | | JP | 7055891 | B2 | 18 April 2022 |
| | | | | JP | 7091461 | B2 | 27 June 2022 |
| | | | | JP | 7202393 | B2 | 11 January 2023 |
| | | | | KR | 10-2020-0092413 | A | 03 August 2020 |
| | | | | KR | 10-2020-0119339 | A | 19 October 2020 |
| | | | | KR | 10-2020-0130346 | A | 18 November 2020 |
| | | | | KR | 10-2020-0138795 | A | 10 December 2020 |
| | | | | KR | 10-2023-0054493 | A | 24 April 2023 |
| | | | | KR | 10-2400921 | B1 | 20 May 2022 |
| | | | | KR | 10-2425325 | B1 | 26 July 2022 |
| | | | | KR | 10-2481574 | B1 | 26 December 2022 |
| | | | | KR | 10-2521605 | B1 | 12 April 2023 |
| | | | | KR | 10-2545987 | B1 | 20 June 2023 |
| | | | | KR | 10-2628738 | B1 | 23 January 2024 |
| | | | | US | 11271203 | B2 | 08 March 2022 |
| | | | | US | 11522186 | B2 | 06 December 2022 |
| | | | | US | 11522187 | B2 | 06 December 2022 |
| | | | | US | 11916224 | B2 | 27 February 2024 |
| | | | | US | 11949096 | B2 | 02 April 2024 |
| | | | | US | 2020-0358096 | A1 | 12 November 2020 |
| | | | | US | 2020-0381727 | A1 | 03 December 2020 |
| | | | | US | 2020-0403228 | A1 | 24 December 2020 |
| | | | | US | 2020-0411859 | A1 | 31 December 2020 |
| | | | | US | 2021-0005877 | A1 | 07 January 2021 |
| | | | | US | 2021-0119204 | A1 | 22 April 2021 |
| | | | | US | 2021-0143423 | A1 | 13 May 2021 |
| | | | | WO | 2019-120973 | A1 | 27 June 2019 |
| KR | 10-2023-0054296 | A | 24 April 2023 | CN | 117178386 | A | 05 December 2023 |
| | | | | EP | 4303959 | A1 | 10 January 2024 |
| | | | | JP | 2024-512946 | A | 21 March 2024 |
| | | | | WO | 2023-063778 | A1 | 20 April 2023 |
| KR | 10-2023-0038124 | A | 17 March 2023 | KR | 10-2023-0038123 | A | 17 March 2023 |
| | | | | US | 2023-0083736 | A1 | 16 March 2023 |
| | | | | WO | 2023-038469 | A1 | 16 March 2023 |
| WO | 2021-246186 | A1 | 09 December 2021 | CN | 115668530 | A | 31 January 2023 |
| | | | | US | 2023-0207784 | A1 | 29 June 2023 |
| | | | | WO | 2021-246186 | A1 | 09 December 2021 |
| CN | 110233253 | A | 13 September 2019 | CN | 110233253 | B | 18 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230064596
- KR 1020230064597

- KR 1020230076142